# EUROPEAN PATENT APPLICATION

(11) **EP 4 656 104 A1**
(43) Date of publication of application: **03.12.2025**
(21) Application number: 25177634.0
(22) Date of filing: 20.05.2025
(51) Int. Cl.: A47J 31/46

(54) **MACHINE FOR PREPARING INFUSED BEVERAGES**

(30) Priority: 27.05.2024 IT 202400011962
(71) Applicant: Capitani S.r.l., 22043 Solbiate con Cagno (CO) (IT)
(72) Inventor: CAPITANI, Gionata, Albiolo (CO) (IT)
(74) Representative: Fabiano, Piero

(57) **Abstract**

A machine for preparing infused beverages, such as for example coffee, of the type operating with pods or capsules containing aromatic essences is described, comprising:
- an infusion assembly (1) comprising an infusion chamber (2) delimited by a first cup-shaped infusing element (3) and provided with a cavity, for accommodating an infusion capsule or pod therein, and a second infusing element (4) which cooperates with the first infusing element to define, when coupled therewith, said infusion chamber (2);
- a heat exchanger (6) configured for heating water;
- a first delivery duct (9) placed downstream of and combined with said infusion chamber (2), said first delivery duct (9) being configured for delivering an infused beverage coming from said infusion chamber (2);
- a second delivery duct (14) placed downstream of said infusion chamber (2) and configured for delivering hot water coming from said heat exchanger (6);
- said second delivery duct (14) comprises a valve member (7) for controlling the delivery of hot water;
- said first valve member (7) comprising:
- a plug (15) movable at least between a first position, in which it prevents the delivery of hot water through said second delivery duct (14), simultaneously allowing the delivery of the infused beverage through said first duct (9), and a second position in which the delivery of hot water through said second delivery duct (14) is allowed and the delivery of the infused beverage through said first duct (9) is simultaneously prevented.

## Description

### Field of the invention

The present invention concerns the field of machines for making infused beverages such as coffee, tea, herbal teas, chocolate, etc. starting from a capsule or pod containing an aromatic substance.

### Known art

The use of machines for generating infused beverages of different flavors, for example coffee, tea or aromatic herbal teas, is known.

A particular type of the aforesaid machines, using disposable capsules or pods, is recently witnessing an ever increasing diffusion; such capsules or pods contain a predefined single portion of substance to be subjected to infusion, for example coffee, thus the aforementioned machines are appropriate for combining great simplicity/versatility of use with optimal organoleptic properties of the beverage.

Known machines however have the drawback of being constructed in an extremely complex way; the Applicant has indeed noticed that known machines typically have an infusion assembly, an exchanger and a recirculation pump which are operationally connected.

The infusion assemblies for coffee machines generally comprise a first cup-shaped infusing element normally named female infuser and comprising a cavity adapted for housing an infusion capsule and/or pod containing an aromatic essence, and a second element normally named male infuser and adapted for closing the aforesaid cavity so as to define an infusion chamber together with the first infusing element.

The capsule, containing the aromatic essence, is placed or transported into the infusion chamber so that the extraction of the aromatic essence occurs with the injection of pressurized hot water into the infusion capsule and/or pod.

The infusion chamber communicates with at least one outlet duct for the outlet of the infused beverage, ending with an outlet nozzle or hopper for the outflow of the beverage. It is further known to provide machines for preparing infused beverages, in particular capsules or pods, provided with a second outlet for delivering hot water only, i.e. not yet an infused beverage. The hot water delivered can therefore be used to prepare an infusion directly in a cup.

The Applicant has noticed that machines for preparing infused beverages, in particular capsules or pods, are for such purpose provided with solenoid valves configured to bypass the infusion chamber so that the hot water coming from the heat exchanger directly enters the second delivery outlet.

The presence of these solenoid valves makes the machines for preparing infused beverages, in particular capsules or pods, bulky and costly.

In this type of machines, the Applicant has further observed the occurrence of encrustations on the solenoid valves which comprise their proper functioning.

The Applicant has further noticed that it is only possible to deliver one infused beverage, such as coffee for example, or alternately hot water, with the machines provided with solenoid valves, in other words, the simultaneous delivery of coffee and hot water is not possible.

The Applicant has therefore addressed the problem of producing a simple and economical machine for preparing infused beverages, provided with a delivery duct for the infused beverage, a delivery duct for hot water and a valve member which allows hot water or the infused beverage to be delivered.

The Applicant has addressed the additional problem of making a machine for preparing infused beverages, which is provided with a delivery duct for the infused beverage, a delivery duct for hot water and a valve member which also allows the simultaneous delivery of hot water and the infused beverage.

### Summary of the invention

Therefore, in its first aspect, the invention concerns a machine for preparing infused beverages, such as for example coffee, of the type operating with pods or capsules containing aromatic essences, comprising:
- an infusion assembly comprising an infusion chamber delimited by a first cup-shaped infusing element and provided with a cavity, for accommodating an infusion capsule or pod therein, and a second infusing element which cooperates with the first infusing element to define, when coupled therewith, said infusion chamber;
- a heat exchanger configured for heating water;
- a first delivery duct placed downstream of and combined with said infusion chamber, said first delivery duct being configured for delivering an infused beverage coming from said infusion chamber;
- a second delivery duct placed downstream of said infusion chamber and configured for delivering hot water coming from said heat exchanger;
- said second delivery duct comprises a valve member for controlling the delivery of hot water;
- said first valve member comprising:
- a plug movable at least between a first position, in which it prevents the delivery of hot water through said second delivery duct, simultaneously allowing the delivery of the infused beverage through said first duct, and a second position in which the delivery of hot water through said second delivery duct is allowed and the delivery of the infused beverage through said first duct is simultaneously prevented.

In the aforesaid aspect, the present invention can have at least one of the preferred characteristics described hereunder.

"Longitudinal" direction means a direction generally oriented according to the translation direction of at least one of the two infusing elements, first and second respectively, for switching from the closed position to the open position and vice-versa.

"Cross" direction means a direction generally orthogonal to the extent direction of the portion, element or duct to which reference is made.

The expression "upstream" or "downstream" is respectively evaluated with respect to the direction of the flow being delivered from the infusion chamber.

The first valve member is preferably configured for gradually varying the flow rate of the infused beverage and hot water being delivered, by the movement of said plug movable from the first to the second position and vice-versa.

The first valve member is advantageously configured for being operated manually by a user outside of the machine, through an outer lever.

The machine for preparing infused beverages conveniently further comprises a first channel for water inflow, which channel extends between the heat exchanger and the first valve member.

The machine for preparing infused beverages preferably comprises a second duct for water inflow configured for feeding hot water into the infusion chamber.

The machine for preparing infused beverages conveniently comprises a second duct for the water flow into the infusion chamber.

The machine for preparing infused beverages preferably comprises at least one second valve element at the inlet of said infusion chamber; said second valve element being configured for allowing hot water to enter the infusion chamber at a water pressure greater than at least 1 bar.

The second duct for water inflow advantageously extends from said heat exchanger.

As an alternative, the second duct for water inflow extends from the first valve member.

The first valve member preferably comprises an inclined guide formed on a side wall of the second delivery duct and a slider combined with the plug and configured to slide inside the inclined guide.

Further characteristics and advantages of the invention will become clearer in the detailed description of some preferred, but not exclusive, embodiments of a machine for preparing infused beverages according to the present invention.

### Brief description of the drawings

That description will be set forth hereunder with reference to the accompanying drawings provided by way of example only and therefore not limiting, in which:
- figure 1 shows a schematic front view of a machine for preparing infused beverages according to the present invention;
- figure 2 shows a schematic view of the infusion assembly of the machine of figure 1 with the operating lever in open position according to the invention;
- figure 3 shows a schematic view of the infusion assembly of the machine of figure 1 with the operating lever in closed position;
- figure 4 shows a schematic view of the infusion assembly of the machine of figure 1 with the operating lever in the central position, so as to allow both the delivery of hot water and the delivery of the infused beverage;
- figure 5 shows a schematic view of a second embodiment of a machine for preparing an infused beverage, according to the invention;
- figure 6 shows a partially sectional schematic view of the first valve member in open position according to the present invention;
- figure 7 shows a partially sectional schematic view of the first valve member in closed position.

### Detailed description of embodiments of the invention

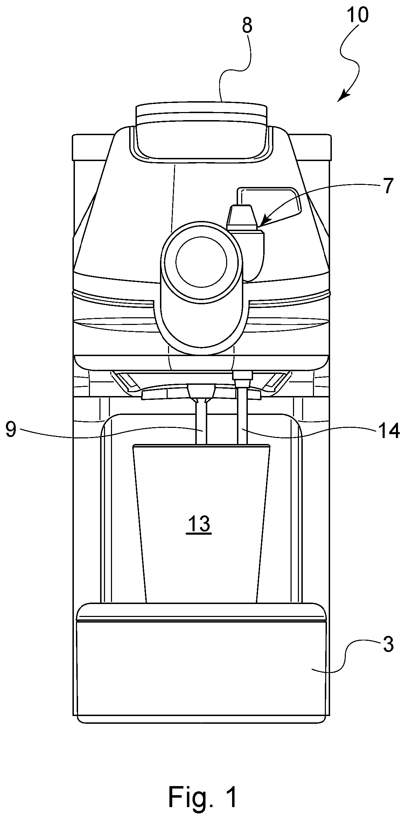

With reference to the figure 1, a machine 10 for preparing an infused beverage by means of a capsule or pod containing an aromatic substance according to the present invention is shown.

In a known way, the machine 10 precisely comprises an infusion assembly 1 and an outer shell configured for containing at least the infusion assembly 1.

The infusion assembly 1 comprises a first cup-shaped infusing element 3 provided with a cavity for accommodating an infusion capsule or pod therein, and a second infusing element 4 which cooperates with the first infusing element 3 so as to define, when coupled therewith, an infusion chamber 2.

The first infusing element 3 and the second infusing element 4 are supported by a supporting frame 5. For example, said frame 5 has a parallelepiped box-shaped structure substantially extending along a main longitudinal axis X-X which can be horizontal in a preferred embodiment.

The supporting frame 5 comprises two side plates 5', 5'' opposite one another and parallel to the main longitudinal axis X-X. The first infusing element 3 and the second infusing element are placed between and are supported by said side plates 5', 5".

At least one of said first infusing element 3 and said second infusing element 4 is a movable infuser. Said movable infuser is translatable with respect to the other along a translation axis coincident with or parallel to the main longitudinal axis X-X of the frame 5. The movable infuser, which is the first infusing element 3 in the preferred embodiment example illustrated, is movable between a rearward open position and a forward closed position so as to form the infusion chamber.

In the closed position, the second infusing element 4 is alongside and adjacent to the first infusing element 3 so as to close its cavity which houses the infusion capsule or pod, therefore achieving a hermetic seal.

For better clarity of exposition and according to the accompanying figures, reference will henceforth be made to the first infusing element 3 as the movable infusing element, but it will be clear to the technician of the field that the teaching provided by the present invention can also be easily applied whenever the movable infusing element is the second infusing element 4.

According to an important aspect of the present invention, as will be described in more detail hereunder, a first duct 9 for the outflow of an infused beverage into a cup extends from the second infusing element 4.

Preferably, outside of the shell there is an operating lever 8 configured for being operated by a user and for driving the translation of the first infusing element 3 from the closed position to the position of maximum opening.

As an alternative, the translation of the first infusing element 3 from the closed position to the position of maximum opening can be driven by an electric motor controlled by a control unit.

The infusion assembly further communicates with a heat exchanger 6 and a water tank.

The water tank and the heat exchanger 6 are of known type and available to the technician of the field, and not further described for that reason.

According to an aspect of the present invention, the infusion chamber 2, and in particular the second infusing element 4, is in fluid communication with a first delivery duct 9 placed downstream of the infusion chamber 2 and configured for delivering the infused beverage coming from the infusion chamber 2 to an outer container 13, such as a coffee cup for example.

In the embodiments shown in the figures, the first delivery duct 9 is arranged at least partially orthogonal to the main longitudinal axis X-X of the frame 5, so as to at least partially protrude from the shell of the machine.

The machine 10 for preparing an infused beverage further has a second delivery duct 14 configured for delivering the hot water coming from the heat exchanger 6 to an outer container 13.

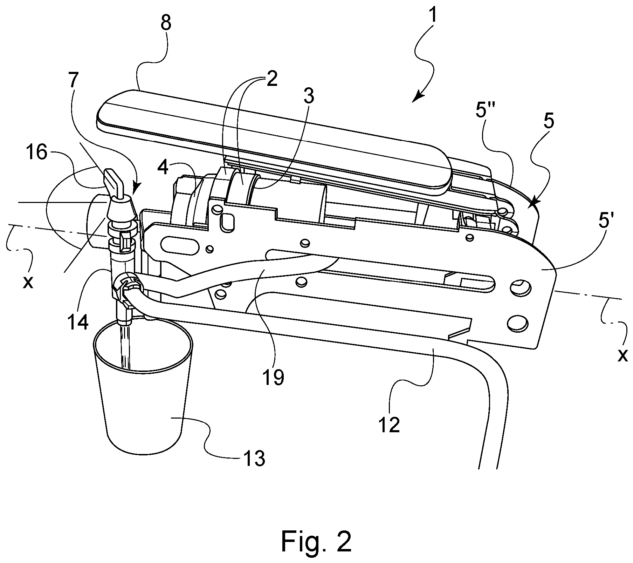

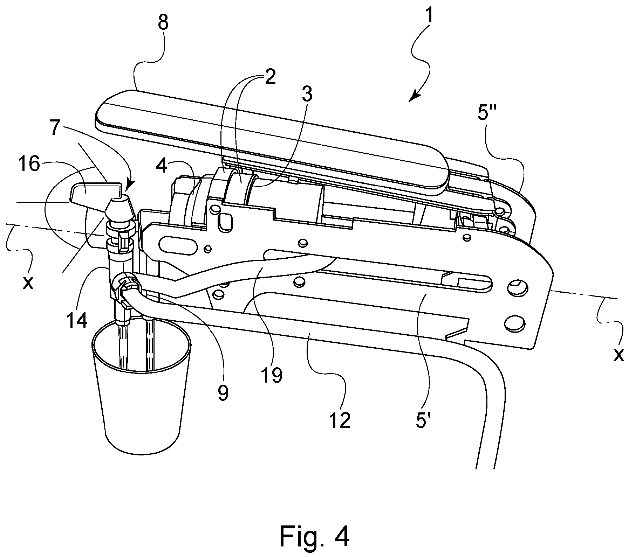

In the embodiments shown in figures 2-4, the second delivery duct 14 at least partially extends orthogonal to the main longitudinal axis X-X of the frame 5, so as to at least partially protrude from the shell of the machine.

The second delivery duct 14 is placed at a maximum distance of 7 cm from the first delivery duct, so as to compact the overall size of the machine 10.

In the embodiments shown in figures 2-7, the second delivery duct 14 is supplied by a first water inflow duct 12 directly coming from the heat exchanger 6.

The second delivery duct 14 further comprises a valve member 7 for controlling the delivery of hot water coming from the heat exchanger 6.

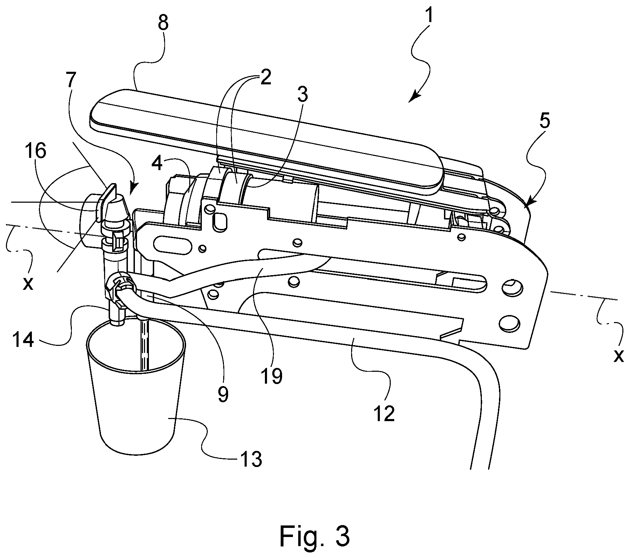

This controlling valve member 7 comprises a plug 15 movable from a first position, in which the delivery of hot water from the second delivery duct 14 is prevented, simultaneously allowing the delivery of the infused beverage through the first duct 9 (fig.3), and a second position, in which the delivery of hot water through the second delivery duct 14 is allowed and the delivery of the infused beverage through the first duct 9 (fig.2) is simultaneously prevented.

During the movement of the plug 15 from the first to the second position, the delivery of hot water, as that of the infused beverage, gradually varies. In other words, if the movement of the plug 15 is driven from the first position towards the second position, the flow rate of the delivery of the infused beverage through the first delivery duct 9 decreases and the delivery of hot water through the second delivery duct 14 simultaneously begins.

During the movement, the flow rate of the infused beverage delivered decreases more and more, while the flow rate of hot water through the second inflow duct 14 increases up to reaching a position between first and second positions of the plug 15 in which the delivered flow rate of hot water is essentially equal to the delivered flow rate of infused beverage.

With the further movement of the plug 15, the variation of the flow rate of hot water further increases up to reaching the second position where only hot water is delivered through the second delivery duct 14, in this position, the delivery of infused beverage through the first delivery duct is indeed prevented.

The process is obviously reversible by switching from the second position to the first position, in other words, the flow rate of hot water being delivered will gradually decrease in favor of the infused beverage.

It will therefore be possible for the user to choose what to delivery, whether infused beverage only, hot water only or both and in what percentage.

In the embodiments shown in the figures, the plug 15 vertically translates from the first to the second position and vice-versa.

The plug 15 is advantageously configured for being operated manually by a user outside of the machine, through an operating lever 16.

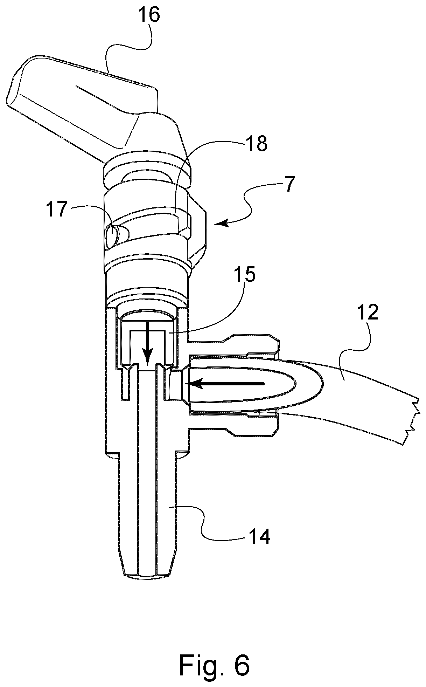

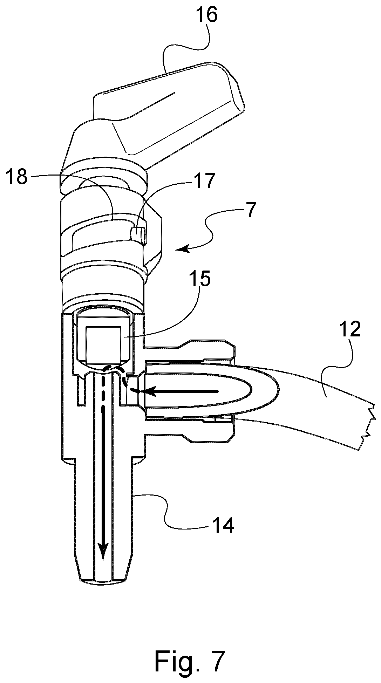

The operating lever 16 is a rotary lever, by rotating the lever 16 in one direction, the plug 15 is translated downward, thus shutting off the delivery of hot water through the second delivery duct 14 (Fig.6), vice-versa, when the operating lever 16 is rotated in the opposite direction, the plug 15 is rotated upward, turning on the delivery of hot water through the second delivery duct 14 (Fig.7).

In order to allow its vertical translation, the stem of the plug 15 has a slider 17 configured to slide inside an inclined guide 18 formed on the side wall of the second delivery duct 14.

The rotation of the operating lever 16 in one direction forces the slider 17 to rotate in the guide 18 and to consequently lower the plug 15, vice-versa, the rotation of the operating lever 16 in the opposite direction forces the plug 17 to rotate in the guide 18 in the opposite direction and to consequently raise the plug 15.

According to a first embodiment shown in figures 2-4, a second duct 19 for water inflow, configured for feeding hot water into the infusion chamber 2, branches off from the valve member 7.

When the plug 15 is in its first position, i.e. in its lowered position with reference to figures 6,7, hot water coming from the heat exchanger 6 cannot be delivered from the second delivery duct 14. The hot water therefore continues through the second duct 19 for water inflow, therefore reaching the infusion chamber 2, here, at the end of the infusion, the infused beverage is delivered through the first delivery duct 9.

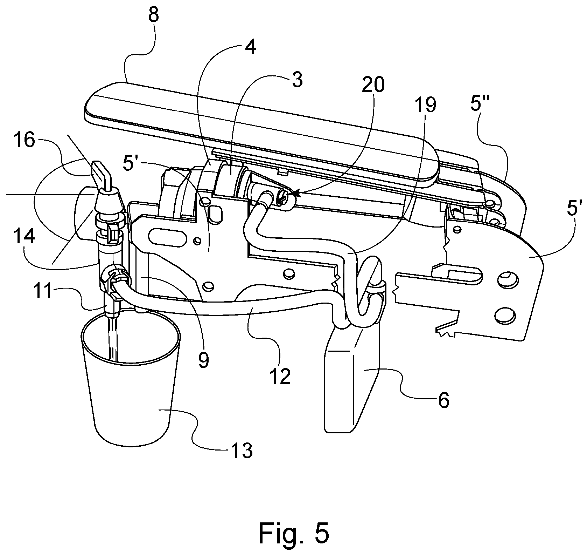

According to an embodiment shown in figure 5, the second duct 19 for water inflow, configured for feeding hot water into the infusion chamber 2, branches off directly from the heat exchanger 6 and reaches the infusion chamber 2.

In this case, when the plug 15 is in its first position, i.e. in its lowered position with reference to figures 6,7, hot water coming from the heat exchanger 6 cannot be delivered from the second delivery duct 14. When coming out of the heat exchanger 6, hot water therefore takes the second duct 19 for water inflow, therefore reaching the infusion chamber 2, here, at the end of the infusion, the infused beverage is delivered through the first delivery duct 9.

Vice-versa, when the plug 15 is in its second position, i.e. in its raised position with reference to figures 6,7, hot water coming from the heat exchanger 6 travels directly through the first inflow duct 12, therefore reaching the second delivery duct 14 from where it is delivered. Since in the second inflow duct 19 there is a preset pressure, greater than about 1 bar and generated by a valve element 20 at the inlet of the infusion chamber, this pressure directs the flow of water coming out of the heat exchanger 6 directly into the first inflow duct 12 and, consequently, into the second delivery duct 14.

The pressure of 1 bar or greater generated by the valve element 20 can be overcome only when the second delivery duct 14 is closed.

The presence of the first manually operated valve element 7 allows the first 12 and second 14 delivery ducts to be arranged close to one another and in proximity of a front end of the machine, therefore reducing the size and constructive complexity of the same.

Several modifications can be made to the embodiments described in detail, all anyhow remaining within the protection scope of the invention, as defined by the following claims.

## Claims

1. Machine for preparing infused beverages, such as for example coffee, of the type operating with pods or capsules containing aromatic essences, comprising:
- an infusion assembly (1) comprising an infusion chamber (2) delimited by a first cup-shaped infusing element (3) and provided with a cavity, for accommodating an infusion capsule or pod therein, and a second infusing element (4) which cooperates with the first infusing element to define, when coupled therewith, said infusion chamber (2);
- a heat exchanger (6) configured for heating water;
- a first delivery duct (9) placed downstream of and combined with said infusion chamber (2), said first delivery duct (9) being configured for delivering an infused beverage coming from said infusion chamber (2);
- a second delivery duct (14) placed downstream of said infusion chamber (2) and configured for delivering hot water coming from said heat exchanger (6);
- said second delivery duct (14) comprises a valve member (7) for controlling the delivery of hot water;
- said first valve member (7) comprising:
- a plug (15) movable at least between a first position, in which it prevents the delivery of hot water through said second delivery duct (14), simultaneously allowing the delivery of the infused beverage through said first duct (9), and a second position in which the delivery of hot water through said second delivery duct (14) is allowed and the delivery of the infused beverage through said first duct (9) is simultaneously prevented.

2. Machine for preparing infused beverages according to claim 1, **characterized in that** said first valve member (7) is configured for gradually varying the flow rate of the infused beverage and hot water being delivered, by the movement of said plug (15) movable from the first to the second position and vice-versa.

3. Machine for preparing infused beverages according to claim 1, **characterized in that** said first valve member (7) is configured for being operated manually by a user outside of the machine, through an outer operating lever (16).

4. Infusion assembly (1) for preparing infused beverages according to claim 1, **characterized by** comprising a first duct (12) for the water inflow, which duct extends between said heat exchanger (6) and said first valve member (7).

5. Machine for preparing infused beverages according to any one of preceding claims 1 to 4, **characterized by** comprising a second duct (19) for the water inflow into said infusion chamber (2).

6. Machine for preparing infused beverages according to claim 5, **characterized by** comprising at least one second valve element (20) at the inlet of said infusion chamber; said second valve element (20) being configured for allowing hot water to enter the infusion chamber at a water pressure greater than at least 1 bar.

7. Machine for preparing infused beverages according to claim 5 or 6, **characterized in that** said second duct (19) for the water inflow extends from said heat exchanger (6).

8. Machine for preparing infused beverages according to claim 5 or 6, **characterized in that** said second duct (19) for the water inflow extends from said first valve member (7).

9. Machine for preparing infused beverages according to any one of the preceding claims, **characterized in that** said first valve member (7) comprises an inclined guide (18) formed on a side wall of the second delivery duct (14) and a slider (17) combined with said plug (15) and configured to slide inside said inclined guide (18).
